# EUROPEAN PATENT SPECIFICATION

(11) **EP 3 951 972 B1**
(45) Date of publication and mention of the grant of the patent: **21.05.2025**
(21) Application number: 20899643.9
(22) Date of filing: 23.11.2020
(51) Int. Cl.: H01M 10/04, H01M 50/46

(54) **METHOD AND APPARATUS FOR MANUFACTURING A UNIT CELL**
VERFAHREN UND VORRICHTUNG ZU HERSTELLUNG EINER EINHEITSZELLE
PROCÉDÉ ET APPAREIL DE FABRICATION D'UNE CELLULE UNITAIRE

(30) Priority: 10.12.2019 KR 20190164069; 13.11.2020 KR 20200151975
(43) Date of publication of application: 09.02.2022
(73) Proprietor: LG Energy Solution, Ltd., Seoul 07335 (KR)
(72) Inventor: BAE, Sang Ho, Daejeon 34122 (KR); JUNG, Su Taek, Daejeon 34122 (KR); KWON, Soon Kwan, Daejeon 34122 (KR); CHOI, Seong Won, Daejeon 34122 (KR); LEE, Yong Jun, Daejeon 34122 (KR); LEE, Sang Woo, Daejeon 34122 (KR); HWANG, Won Pill, Daejeon 34122 (KR); KIM, Tae Jong, Daejeon 34122 (KR)
(74) Representative: Plasseraud IP
(86) International application number: PCT/KR2020/016609
(87) International publication number: WO 2021/118105

(56) References cited:
- EP-A1- 2 819 232
- EP-A1- 2 866 290
- WO-A1-2018/154777
- WO-A1-2019/039102
- JP-A- 2012 209 054
- JP-B2- 5 291 811
- KR-A- 20020 089 716
- KR-A- 20110 048 839
- KR-A- 20190 103 365

## Description

### TECHNICAL FIELD

The present invention relates to a unit cell and a method and apparatus for manufacturing the same and, more specifically, to: a unit cell in which electrodes (a negative electrode, a positive electrode) are bonded to a separator using an adhesive unlike a lamination method using heat and pressure according to the related art, thereby preventing the electrodes and the separator from moving; and a method and apparatus for manufacturing the same.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Such a secondary battery is configured such that an electrode assembly is accommodated in a battery case (a pouch, a can, and the like). The electrode assembly mounted inside the battery case is repeatedly chargeable and dischargeable because of its structure in which a positive electrode/a separator/a negative electrode are stacked. The electrode assembly is manufactured in various methods, but a method is generally used, in which a unit cell 4 is manufactured in advance and then a plurality of unit cells 4 are stacked to manufacture the electrode assembly.

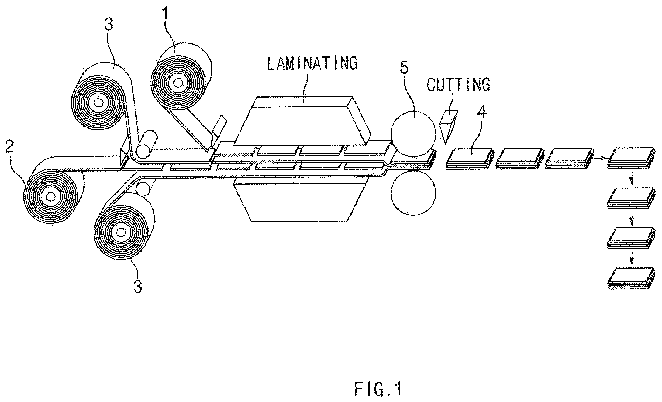

That is, referring to FIG. 1 schematically illustrating a state in which a unit cell is manufactured through a method according to the related art, a method for manufacturing a unit cell 4 according to the related art is configured such that a positive electrode 1, a separator 3 at a relatively upper position, a negative electrode 2, and a separator 3 at a relatively lower position, which have been stacked in this order from the upper side and wound in a roll shape, are continuously unwound and supplied.

Here, the separators 3 are continuously supplied without disconnection, the negative electrode 2 is supplied between the separators 3, and the positive electrode 1 is supplied above the upper separator 3. These electrodes, which have been cut into a predetermined size, are input at constant intervals. Here, input timing is controlled so that the negative electrode 2 and the positive electrode 1 are stacked vertically corresponding to each other. Thus, the separators 3 are continuously connected, but the negative electrode 2 and the positive electrode 1 continuously pass through a laminating device while spaced a certain distance from a neighboring negative electrode 2 and a neighboring positive electrode 1.

While passing through the laminating device, spaces between the positive electrode 1, the separator 3, and the negative electrode 2 are heated and pressed by nip rollers 5. That is, the laminating (bonding) is made by heating and pressing, and then, the separators 3 are cut, whereby an individual unit cell 4 is manufactured.

However, in the method according to the related art described above, the electrodes (the positive and negative electrodes) may be moved away from original right positions or damaged while being heated and pressed. Also, when the heating is not uniform, adhesion force between the electrodes 1 and 2 and the separator 3 may become irregular.

Further prior art is described in EP 2 866 290 A1. This document discloses that cut electrode material is interposed between an upper separator and a lower separator and that cut electrode material is supplied to the upper separator prior to the step of laminating the stacked materials in laminators.

### DISCLOSURE OF THE INVENTION

### TECHNICAL PROBLEM

Thus, main objects of the present invention are to provide: a method and apparatus for manufacturing a unit cell, which may solve the problem occurring in a laminating process of the related art; and a unit cell manufactured by the above method and apparatus.

### TECHNICAL SOLUTION

To achieve the above-described objects, the present invention provides: a method and apparatus for manufacturing a unit cell, in which an electrode is bonded (laminated) to a separator by an adhesive; and a unit cell which may be manufactured by the above method and apparatus.

The present invention provides a method for manufacturing a unit cell according to another embodiment. A method for manufacturing a unit cell according to the embodiment comprises: a step of continuously conveying and supplying, in a longitudinal direction, a lower separator which is located at a relatively lower position; a step of applying an adhesive to a portion of a top surface of the lower separator; a step of mounting, on the lower separator, one electrode of a negative electrode or a positive electrode which is cut into a predetermined size and located on one side of the lower separator; a step of continuously conveying and supplying an upper separator which is located at a relatively upper position; and a step of applying an adhesive to a portion of one surface of the upper separator, wherein the upper separator is supplied from the upper side in a direction perpendicular to a traveling direction of the lower separator, and is horizontally conveyed while the adhesive is applied so that the adhesive is applied vertically from the upper side, and wherein the upper separator is stacked on the electrode such that one surface of the upper separator on which the adhesive has been applied is placed on a top surface of the electrode.

The upper separator is conveyed along a nip roller pressing the lower separator and the electrode and a guide roller disposed above the nip roller, and both surfaces of the upper separator are reversed. When the one surface of the upper separator is laid horizontally while conveyed along the guide roller, the adhesive is applied onto the one surface, and the upper separator is input between the nip roller and the electrode such that the one surface on which the adhesive has been applied covers the top surface of the electrode.

The method further comprises a step of further applying an adhesive to a portion of the top surface of the upper separator after the upper separator is stacked on the electrode. After the step of further applying the adhesive to the portion of the top surface of the upper separator, the method comprises a step of further mounting an electrode onto the top surface of the upper separator on which the adhesive has been applied, wherein the electrode mounted on the top surface of the upper separator has a different polarity from the electrode stacked between the upper separator and the lower separator.

The method may comprise a step of allowing the lower separator, the electrode, the upper separator, and the electrode, which are stacked in this order from the lower side to the upper side, to pass through between a pair of auxiliary nip rollers, thereby pressing the lower separator, the electrode, the upper separator, and the electrode.

An apparatus for manufacturing a unit cell according to the present invention comprises: a lower reel from which a lower separator located at a relatively lower position is unwound; a first nozzle configured to apply an adhesive to a top surface of the unwound lower separator; an upper reel from which an upper separator located at a relatively upper position is unwound; a second nozzle configured to apply an adhesive to one surface of the unwound upper separator; a guide roller configured to change a conveyance direction of the upper separator so that the upper separator unwound from the upper reel passes horizontally under the second nozzle; and a nip roller configured to input the upper separator onto an electrode such that, after passing through the guide roller, the one surface of the upper separator on which the adhesive has been applied faces downward and is bonded to a top surface of the electrode mounted on the top surface of the lower separator; a first gripper configured to mount the electrode, which is cut into a predetermined size and located on one side of the lower separator, on the top surface of the lower separator on which the adhesive has been applied, wherein the upper separator is stacked such that the surface of the upper separator, on which the adhesive has been applied, is placed as a bottom surface by the nip roller so as to come into contact with the electrode, and the apparatus further comprises a third nozzle configured to apply an adhesive to a top surface of the upper separator after the upper separator is stacked on the electrode, and a second gripper configured to mount an electrode, which is cut into a predetermined size and located on one side of the upper separator and which has a different polarity from the electrode stacked below the upper separator, on the top surface of the upper separator on which the adhesive has been applied.

The apparatus may comprise a first vision which is disposed above the electrode and captures an image of a position, in which the electrode is mounted by the first gripper, prior to bonding the electrode to the lower separator.

The nip roller is disposed on each of both sides of a first stack, which is formed by stacking the lower separator, the electrode, the upper separator in this order, and presses the first stack while rotating.

The nip roller and the guide roller are spaced a certain distance from each other, and the upper separator remains horizontal while the upper separator is conveyed between the nip roller and the guide roller.

The apparatus may comprise an auxiliary nip roller which is disposed on each of both sides of a second stack, which is formed by mounting the lower separator, the electrode, the upper separator, and the electrode in this order from the lower side below, and presses the second stack while rotating.

The apparatus may comprise a second vision configured to capture an image of a position, in which the electrode is mounted by the second gripper, prior to mounting the electrode onto the upper separator.

In addition, in the embodiment, each of the first nozzle, the second nozzle, and the third nozzle comprises a plurality of nipples having ends through which the adhesives are applied, and the nipples of each of the first nozzle, the second nozzle, and the third nozzle are spaced apart from each other so that nipples disposed outside apply the adhesives in the vicinity of an edge of the electrode, and a nipple disposed between the nipples applies the adhesives to the vicinity of the center of the electrode, wherein spray speeds and spray amounts of the adhesives, which are sprayed from the nipples of each of the first nozzle, the second nozzle, and the third nozzle, may be individually controlled.

### ADVANTAGEOUS EFFECTS

In the method for manufacturing the electrode assembly according to the present invention having the above-described technical features, because the heat and pressure may not be applied or may be applied much weaker than the related art when the electrode and the separator are laminated, the distortion between the separator and the electrode may be prevented, and the deformation of the electrode and the separator, the damage thereto, and the like may be prevented.

In the present invention, according to the application position of the adhesive, the separators are bonded to each other, or the separator is bonded to the electrode, whereby the electrode may be fixed. That is, according to the properties of the electrode such as size and thickness, the adhesive is applied to the region to which the electrode is mounted, and thus the separator may directly fix and prevent the electrode from moving, or the separators stacked on both sides of the electrode are bonded to each other, whereby the electrode may be prevented from moving.

In addition, since the adhesive may be partially applied to only very small regions such as the corners of the electrode in the manufacturing method of the present invention, when this method is additionally applied to the lamination process of the related art in which the heat and pressure are applied, the position of the electrode may be temporarily fixed before the lamination process is conducted.

In the present invention, the adhesive is ejected in the form of small particles and thus may be dispersed and impregnated between coating layers on the surface of the separator.

Also, since the electrodes (the positive electrode, the negative electrode) may be input through the visions and the grippers, the electrode may be input and mounted to more accurate position compared to the method in which a cutting speed of a cutter is controlled.

In addition, since the application amount may be controlled in a specific region of the unit cell according to the present invention, the optimal bonding state may be provided according to the usage of the unit cell and the characteristics of the separator and the electrode.

### BRIEF DESCRIPTION OF THE DRAWINGS

FIG. 1 is a view schematically illustrating a state in which a unit cell is being manufactured through a method according to the related art.
FIG. 2 is a view schematically illustrating a state in which manufacturing is being carried out through a manufacturing method not covered by the present invention.
FIG. 3 is a view schematically illustrating a state in which an adhesive is sprayed in the form of mist.
FIG. 4 is a view schematically illustrating a state in which an adhesive is sprayed in the form of droplets.
FIG. 5 is a view illustrating a state in which an adhesive is impregnated into a surface of a coating layer of a separator.
FIG. 6 is a view illustrating positions (a) to (f) in which an adhesive may be applied with respect to an electrode.
FIG. 7 is a view schematically illustrating a state in which a unit cell is being manufactured through a manufacturing method according to a first embodiment of the present invention by a manufacturing apparatus according to a second embodiment.
FIG. 8 is a view schematically illustrating a state when the state of FIG. 7 is viewed from the side.
FIG. 9 is a view schematically illustrating a state when the state of the FIG. 7 is viewed from the top to the bottom.
FIG. 10 is a view showing points 'a' to which an adhesive is applied by a first nozzle before the negative electrode is stacked on the lower separator.
FIG. 11 is a view (in a state in which an upper separator 30b is stacked on a negative electrode) showing points to which an adhesive is applied by a first nozzle and a second nozzle after an upper separator is stacked on a negative electrode.
FIG. 12 is a view showing points to which an adhesive is applied by a third nozzle before a positive electrode is stacked on a top surface of an upper separator stacked on a negative electrode.

### MODE FOR CARRYING OUT THE INVENTION

Hereinafter, embodiments of the present invention will be described in detail with reference to the accompanying drawings so that those skilled in the art can easily carry out the present invention. However, the present invention may be modified in various different forms within the scope as defined by the appended claims, and is not limited to the exemplary embodiments described herein.

A part irrelevant to the description will be omitted to clearly describe the present invention, and the same or similar elements will be designated by the same reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a method for manufacturing a unit cell in which a certain number of separators 30 and electrodes (a positive electrode 10 and a negative electrode 20) are alternately stacked. Hereinafter, the present invention will be described in more detail with reference to the accompanying drawings.

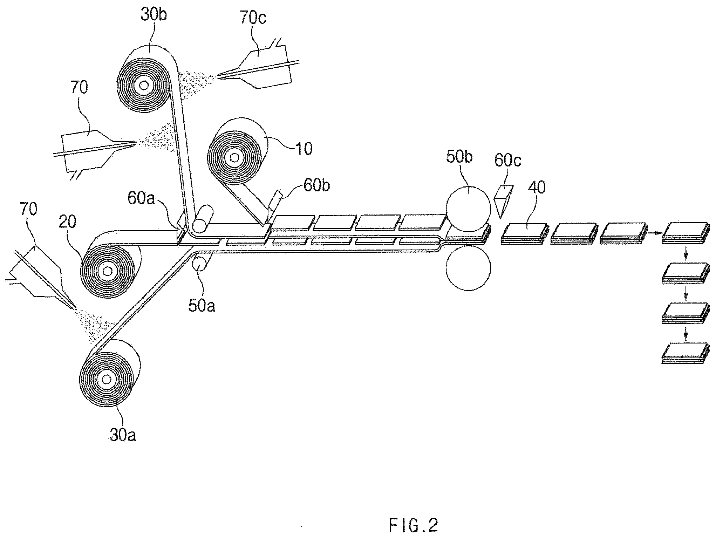

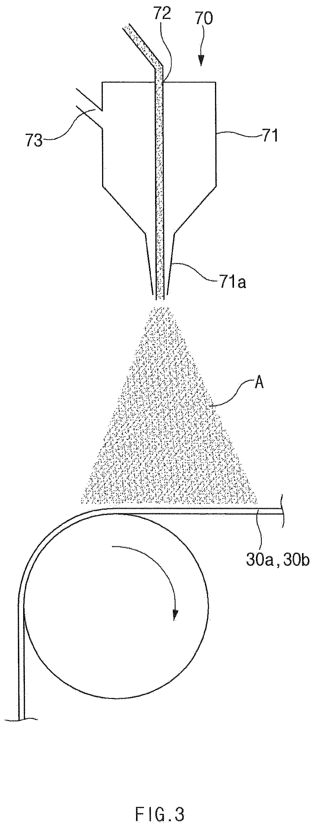

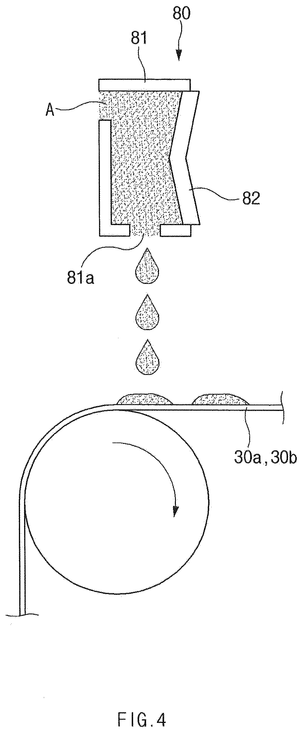

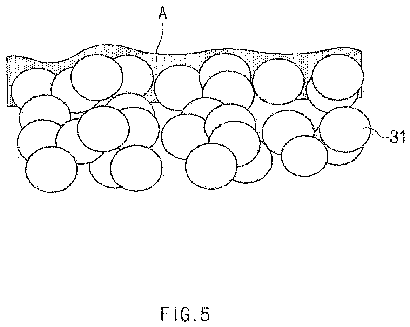

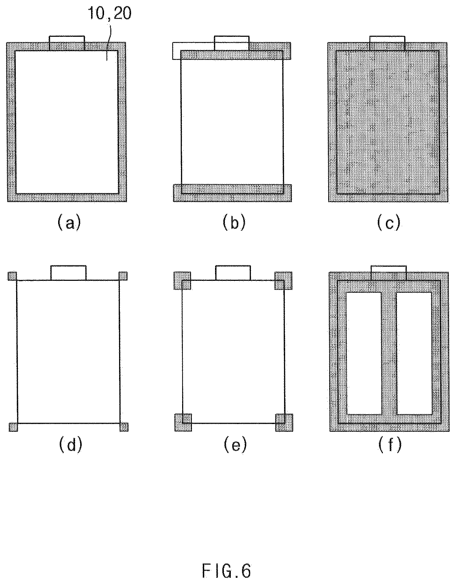

FIG. 2 is a view schematically illustrating a state in which manufacturing is being carried out through a manufacturing method not covered by the present invention, FIG. 3 is a view schematically illustrating a state in which an adhesive is sprayed in the form of mist, and FIG. 4 is a view schematically illustrating a state in which an adhesive is sprayed in the form of droplets. Also, FIG. 5 is a view illustrating a state in which an adhesive is impregnated into a surface of a coating layer of a separator, and FIG. 6 is a view illustrating positions (a) to (f) in which an adhesive may be applied with respect to an electrode.

A method for manufacturing a unit cell not covered by the present invention comprises an adhesive applying step, an electrode inputting step, and the stacking step. Also, the unit cell has a structure in which a certain number of a negative electrode 20, a separator 30, and a positive electrode 10 are stacked repeatedly.

First, in the electrode inputting step, separators (that is, a lower separator 30a and an upper separator 30b) wound in a roll shape are individually unwound from two places and continuously provided. Also, electrodes (a positive electrode or a negative electrode), which have been cut into an appropriate size by cutter 60a and 60b, are input and stacked between the separators 30a and 30b or on a top surface of the upper separator 30b placed at an upper position.

That is, according to input sequences and input positions of the electrodes, the unit cell provided in the embodiment may have a structure in which the positive electrode 10/the upper separator 30b/the negative electrode 20/ the lower separator 30a are stacked in this order from the upper side or a structure having the order of the negative electrode 20/the upper separator 30b/the positive electrode 10/the lower separator 30a.

Here, the separators 30a and 30b are provided respectively from at least two places, and thus two or more sheets of separators are continuously input. Particular, the adhesive applying step of applying an adhesive A on surfaces of the separators 30a and 30b is performed, prior to inputting the positive electrode 10 and the negative electrode 20, that is, before the electrode inputting step is completed.

In the adhesive applying step, the adhesive A applied to the separators 30a and 30b may be applied to positions for directly bonding the electrodes 10 and 20 to the separators 30a and 30b or positions for bonding the separators 30a and 30b to each other. Here, in both cases, the electrodes 10 and 20 may be prevented from moving.

That is, making an explanation with respect to the negative electrode 20 stacked between the separators 30a and 30b, the negative electrode 20 is located between the lower separator 30a at the lower position and the upper separator 30b at the upper position.

The negative electrode 20 may be prevented from moving, when bonded to at least one separator of the lower separator 30a at the lower position or the upper separator 30b at the upper position. In addition, when the lower separator 30a at the lower position and the upper separator 30b at the upper position are bonded to each other with the negative electrode 20 therebetween along edges of the negative electrode 20, a space, in which the negative electrode 20 is movable, is restricted, and thus, the negative electrode 20 may be prevented from moving.

However, since there is the upper separator 30b only below the positive electrode 10 placed as the uppermost layer, the adhesive A has to be applied to contact portions between the upper separator 30b and the positive electrode 10 so as to restrict the movement the positive electrode 10.

That is, in the adhesive applying step, the adhesive A is applied to a region except for a region in which the negative electrode 20 is stacked, and thus the separators 30a and 30b with the negative electrode 20 therebetween may be bonded to each other in the stacking step, or the adhesive A is applied to a region of any one separator of the two separators 30a and 30b on which the negative electrode 20 is stacked, and thus the separators 30a and 30b and the negative electrode 20 may be bonded to each other in at least a portion of the contact surfaces. On the other hand, with respect to a place in which the positive electrode 10 is positioned, the adhesive A is applied to a top surface of the upper separator 30b corresponding to a region in which the positive electrode 10 is positioned.

Referring to FIG. 6 illustrating positions (a) to (f) in which the adhesive A may be applied with respect to the electrode (a region indicated by dots in FIG. 6 represents a position in which the adhesive is applied), each of the positive electrode 10 and the negative electrode 20 used in the present invention has a rectangular shape with two short sides being relatively short and two long sides being relatively longer, and are stacked such that the long sides are parallel to the width direction of the separators 30a and 30b.

Also, as illustrated in (a), the adhesive A may be applied to only a certain region of the separators 30a and 30b along edges of the electrodes 10 and 20, but the region is not in contact with the electrodes 10 and 20. Here, the adhesive A may be selectively applied or not applied to an electrode tab that protrudes from the electrodes 10 and 20.

Also, as in (b), the adhesive A may be applied only to regions in which both the short sides of the electrodes 10 and 20 are placed so that the electrodes 10 and 20 and the separators 30a and 30b are bonded to each other only at both the short sides of the electrodes 10 and 20. In addition, as in (c), the adhesive A may be applied to regions, in which the separators 30a and 30b come into contact with each other, as well as regions in which the separators 30a and 30b contact to the electrodes 10 and 20 so that all of the contact surfaces of the separators 30a and 30b and the electrodes 10 and 20 are bonded to each other.

Furthermore, as in (d) and (e), the adhesive A may be applied only to regions in which four vertices of the electrodes 10 and 20 are to be positioned. Also, as in (f), additional adhesive application may be made in a region between both the short sides or between both the long sides of the electrodes 10 and 20 as well as regions in which the short sides and the long sides are to be positioned.

In such a state in which the adhesive A is applied to the separators 30a and 30b, the stacking step is made by stacking the separators 30a and 30b and the electrodes 10 and 20. That is, in the stacking step, the two sheets of separators 30a and 30b and the electrodes 10 and 20 are alternately positioned and stacked.

In addition, after the stacking step, a roller passing step may be further selectively performed, in which, so that the separator 30 on which the adhesive A has been applied is further efficiently bonded to the electrode or the separator provided together, the stacked separators and electrodes are pressed by facing nip rollers 50a and 50b while passing therethrough.

The nip rollers 50a and 50b press the electrodes 10 and 20 and the separators 30a and 30b with pressure much less than that of a laminating method according to the related art. Also, the pressing may be made at a lower temperature without heating. Through the method described above, damage to the electrodes 10 and 20 and the separators 30a and 30b or shortcircuits thereof may be prevented.

In addition, after the adhesive applying step, the separators 30a and 30b and the electrodes 10 and 20 are cut by a cutter 60c into an individual unit cell 40 in which a certain number of the separators 30a and 30b and the electrodes 10 and 20 are alternately stacked. The cutter 60c may have a size greater than that of each of cutters 60a and 60b that cut the negative electrode 20 and the positive electrode 10.

Here, two types of methods are provided as a method for applying an adhesive.

### Spray jet

Referring to FIG. 3, provided is a spray jet method in which adhesive particles and compressed air are sprayed together.

In a spray device 70 according to this method, a pipe 72 receiving an adhesive A is inserted into a housing 71 having a space provided therein. When the adhesive A passes through the pipe 72 and is ejected through a nozzle 71a of the housing 71, compressed air is injected through a line 73 connected to the housing 71, and the adhesive A is discharged with the compressed air through the nozzle 71a.

When the adhesive A is discharged with the compressed air, particles are split into mist by the compressed air and then applied, in the split state, to surfaces of the separators 30a and 30b.

### Inkjet spray

Referring to FIG. 4, in this method, an adhesive A is sprayed in the form of fine droplets by a change in pressure inside a pressure chamber.

That is, a spray device 80 has a housing 81 which has a space provided therein, and a wall 82 on one side thereof is moved to cause a change in volume inside the pressure chamber. When the adhesive A is filled into the pressure chamber, the adhesive A is not discharged through a discharge port 81a due to viscosity thereof in a state in which the adhesive A is filled. However, when the wall 82 moves in a direction for reducing the volume of the pressure chamber, the pressure inside the pressure chamber is increased, and the adhesive A is discharged to the outside through the discharge port 81a and then applied onto the separator 30. Then, when the wall 82 is restored to the original state thereof, the discharging of the adhesive A is stopped. That is, the principal that the adhesive A is applied is similar to the principal that ink is ejected in an inkjet printer.

The adhesive A applied through the spray jet method or the inkjet spray method described above may be applied in the form of small particles at predetermined positions and with predetermined amounts. Thus, as illustrated in an enlarged view of FIG. 5 showing a state in which an adhesive is impregnated into a surface of a coating layer 31 of the separator, the adhesive A is uniformly applied to the surface of the coating layer 31 of the separator and then permeates evenly an overall area on which the adhesive has been applied. Therefore, optimal adhesion force may be attained without loss of the adhesive A.

### First embodiment

As one embodiment, the present invention provides a manufacturing method in which an electrode may be input more accurately, and an adhesive A may be applied more precisely in the vertical direction (that is, from the top to the bottom) so that a spray direction is not affected by gravity.

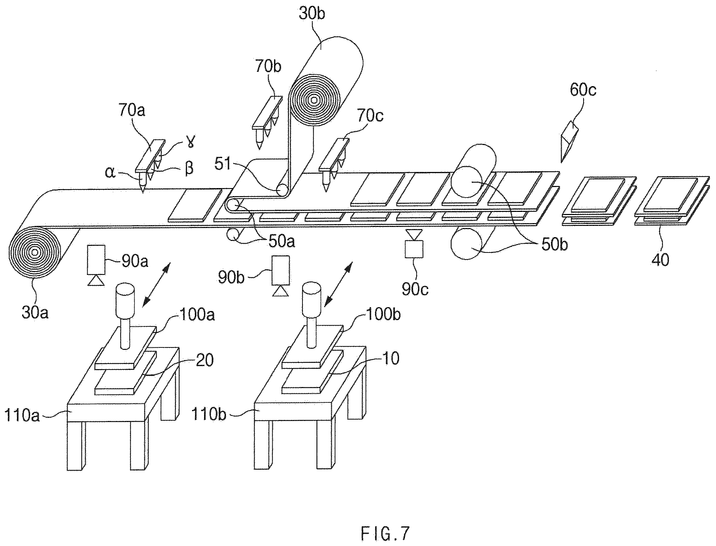

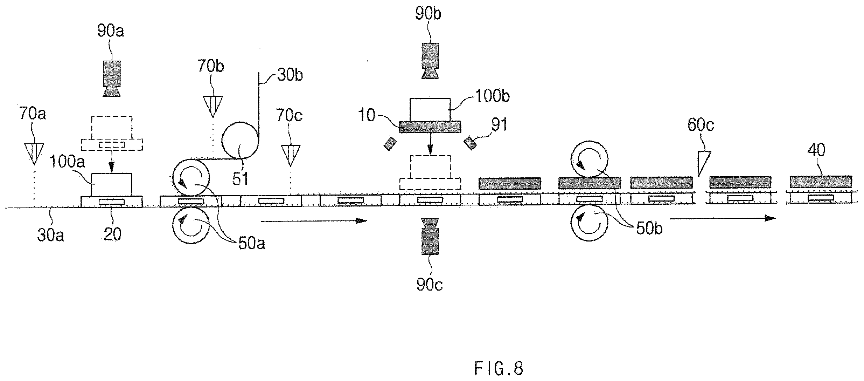

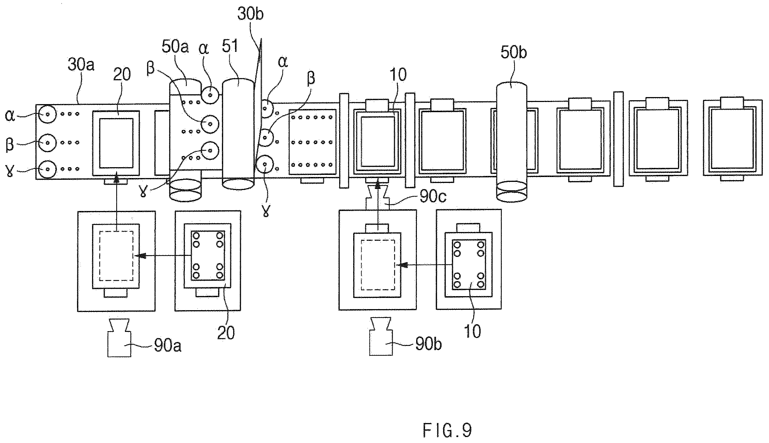

FIG. 7 is a view schematically illustrating a state in which a unit cell is being manufactured through a manufacturing method according to the first embodiment of the present invention by a manufacturing apparatus according to a second embodiment described later, FIG. 8 is a view schematically illustrating a state when the state of FIG. 7 is viewed from the side, and FIG. 9 is a view schematically illustrating a state when the state of the FIG. 7 is viewed from the top to the bottom.

Similar to the manufacturing method described for illustrative purposes above, the manufacturing method of the embodiment of the present invention also provides a method for manufacturing a unit cell 40 by stacking an electrode 10 and 20 and separators 30a and 30b. An adhesive A is applied in advance when electrodes 10 and 20 are mounted on the separators 30a and 30b, thereby preventing the electrodes 10 and 20 from moving even though not using an expensive separator.

A method for manufacturing a unit cell according to the embodiment comprises: a step of continuously conveying and supplying, in a longitudinal direction, a lower separator 30a which is located at a relatively lower position; a step of applying an adhesive A to a portion of a top surface of the lower separator 30a; a step of mounting, on the lower separator, one electrode of a negative electrode 20 or a positive electrode 10 which is cut into a predetermined size and located on one side of the lower separator 30a; a step of continuously conveying and supplying an upper separator 30b which is located at a relatively upper position; and a step of applying an adhesive A to a portion of one surface of the upper separator 30b.

Here, the upper separator 30b is supplied from the upper side in a direction (from the upper side to the lower side in FIG. 7) perpendicular to a traveling direction (from the left side to the right side in FIG. 7) of the lower separator 30a, and is horizontally (the left and right direction in FIG. 7) conveyed while the adhesive A is applied so that the adhesive A is applied vertically from the upper side. The upper separator 30b is stacked on the electrode such that the one surface of the upper separator 30b on which the adhesive A has been applied is placed on a top surface of the electrode.

The upper separator 30b is conveyed along a nip roller 50a pressing the lower separator 30a and the negative electrode 20 and a guide roller 51 disposed above the nip roller 50a, and both surfaces thereof are reversed. That is, when the one surface of the upper separator 30b is laid horizontally while conveyed along the guide roller 51, the adhesive A is applied onto the one surface, and the upper separator 30b is input between the nip roller 50a and the negative electrode 20 such that the one surface on which the adhesive A has been applied covers the top surface of the negative electrode 20. That is, in the embodiment, the upper separator 30b is input as being turned upside down after the adhesive A is applied.

After the upper separator 30b is stacked on the negative electrode 20, there is further provided a step of further applying an adhesive to a portion of the top surface of the upper separator 30b. Also, after the step of further applying the adhesive A to the portion of the top surface of the upper separator 30b, there is provided a step of further mounting the positive electrode 10 onto the top surface of the upper separator 30b on which the adhesive A has been applied.

The electrode mounted on the top surface of the upper separator 30b is the positive electrode 10, which has a different polarity from the negative electrode 20 stacked between the upper separator 30b and the lower separator 30a. That is, when the electrode placed between the upper separator 30b and the lower separator 30a is the negative electrode 20, the electrode stacked on the upper separator 30b is the positive electrode 10, or vice versa.

There is further provided a step of allowing the lower separator 30a, the electrode, the upper separator 30b, and the electrode, which are stacked in this order from the lower side to the upper side, to pass through between a pair of auxiliary nip rollers 50b, thereby pressing the lower separator 30a, the electrode, the upper separator 30b, and the electrode.

Also, the separators 30a and 30b between the electrodes may be cut by a cutter 60c, thereby manufacturing an individual unit cell 40.

### Second embodiment

As a second embodiment, the present invention provides a manufacturing apparatus capable of performing the manufacturing method according to the first embodiment.

Referring to FIGS. 7 to 9, an apparatus for manufacturing a unit cell according to the embodiment comprises: a lower reel from which a lower separator 30a located at a relatively lower position is unwound; a first nozzle 70a which applies an adhesive to at least a portion of a top surface, facing upward, of the unwound lower separator 30a; an upper reel from which an upper separator 30b located at a relatively upper position is unwound; a second nozzle 70b which applies an adhesive to at least a portion of one surface, facing upward, of the unwound upper separator 30b; a guide roller 51 which changes the conveyance direction of the upper separator 30b so that the upper separator 30b unwound from the upper reel passes horizontally under the second nozzle 70b; and a nip roller 50a which inputs the upper separator 30b onto an electrode (a negative electrode 20 in the drawing) such that, after passing through the guide roller 51, the one surface of the upper separator 30b on which the adhesive has been applied by the second nozzle 70b faces downward and is bonded to a top surface of the electrode mounted on one surface of the lower separator 30a.

Here, the upper reel and the lower reel may comprise rotary devices (not shown) for rotating and unwinding the lower separator 30a and the upper separator 30b and power devices connected to the rotary devices.

The negative electrode 20 is mounted on the top surface of the lower separator 30a unwound from the lower reel, and the upper separator 30b unwound from the upper reel is stacked on the negative electrode 20. Accordingly, the lower separator 30a, the negative electrode 20, and the upper separator 30b are stacked in this order.

The first nozzle 70a, the second nozzle 70b, and a third nozzle 70c described later may spray the adhesive A through not only the spray method or inkjet method described in the first embodiment, but also various spray methods such as a dispensing method or a screen printing method.

Here, the spray method may change depending on chemical properties of the adhesive being sprayed, and the first nozzle 70a, the second nozzle 70b, and the third nozzle 70c may spray adhesives having different characteristics. With respect to the conveyance direction of the lower separator 30a (that is, with respect to FIG. 7), the first nozzle 70a is located before a position in which the negative electrode 20 is stacked, the second nozzle 70b is located between the guide roller 51 and the position in which the negative electrode 20 is stacked, and the third nozzle 70c is located after a position of the guide roller 51.

Here, in the drawing, the first nozzle 70a, the second nozzle 70b, and the third nozzle 70c are illustrated as spraying adhesives in a direction perpendicular, i.e., at 90 degrees to the surfaces of the separators 30a and 30b, but the spray angles of the first nozzle 70a, the second nozzle 70b, and the third nozzle 70c may be adjusted according to the surfaces of the separators 30a and 30b on which the adhesive is sprayed. For example, although not illustrated in the drawing, refrigerating and air conditioning devices, sensor devices, lighting devices, electric control devices, and the like may be disposed during a manufacturing process, and these devices may interfere with the nozzles 70a,70b, and 70c. Thus, within a range not negatively affecting the spray of adhesive, the spray angles of the nozzles 70a, 70b, and 70c may be controlled to various angles (for example, 30 degrees, 45 degrees, and 60 degrees, 135 degrees, 150 degrees, or the like).

Also, according to circumstances, when the sprayed adhesive has sufficient viscosity and thus does not flow down, the nozzles 70a, 70b, and 70c may be disposed such that the adhesive is sprayed upward from below the separators 30a and 30b. For example, the conveyance path of the upper separator 30b may change depending on a path on which the guide roller 51 is disposed, and here, the second nozzle 70b may be disposed below the upper separator 30b and configured such that the adhesive is sprayed from the lower side toward the upper side.

Also, as the adhesive A used in the present invention, a polyurethane-based adhesive, a polyolefin adhesive, a poly urethane reactive (PUR)-based adhesive, an acrylic adhesive, or the like may be selected, or a mixture of two or more thereof may be used. Also, thermosetting or photocurable components may be further added to shorten drying time.

Here, each of the negative electrode 20 and the positive electrode 10 provided in the embodiment is manufactured by applying slurry of an active material, a conductive material, and a binder onto an electrode collector and then drying and pressing the resultant. Also, after the electrode is manufactured in a separate processing line, the electrode is cut into a predetermined size and then provided.

That is, the negative electrode 20 may be provided in a state of being stored in a first magazine provided on one side on which the lower separator 30a is disposed, and the positive electrode 10 may be provided in a state of being stored in a second magazine which is spaced apart from the first magazine on the one side on which the lower separator 30a is disposed.

The negative electrode 20 and the positive electrode 10 provided in a state of being stored in the first magazine and the second magazine may be moved one by one to tables 110a and 110b, respectively, or may be moved directly on the lower separator 30a and the upper separator 30b by a first gripper 100a and a second gripper 100b without going through the tables 110a and 110b.

That is, the first gripper 100a and the second gripper 100b are provided in the embodiment so that the negative electrode 20 and the positive electrode 10, which have been cut into a certain size, are conveyed onto the separators 30a and 30b. For reference, each of the first gripper 100a and the second gripper 100b has the structure of tongs and is configured to move the negative electrode 20 and the positive electrode 10 while gripping the same. However, the gripper may be configured to convey the negative electrode 20 and the positive electrode 10 by vacuumsuctioning the surfaces of the electrodes, moving the same to a desired position, and then releasing the vacuum state.

Thus, the negative electrode 20 and the positive electrode 10 may be conveyed onto the lower separator 30a to which the adhesive is applied from the first nozzle 70a and the upper separator 30b to which the adhesive is applied from the third nozzle 70c, respectively.

Here, the upper separator 30b vertically conveyed downward above the lower separator 30a changes in direction through the guide roller 51. That is, the guide roller 51 changes the conveyance direction when the upper separator 30b is unwound and conveyed so that one surface of the upper separator 30b faces upward.

Also, when the second nozzle 70b sprays the adhesive on the surface, facing upward, of the upper separator 30b, the upper separator 30b is turned upside down through the nip roller 50a, and the surface, on which the adhesive is sprayed, is stacked on the negative electrode 20. Here, while the upper separator 30b passes through between the nip roller 50a and the guide roller 51, the upper separator 30b remains horizontal, and the adhesive is applied or sprayed thereon.

The nip roller 50a is also further disposed below the lower separator 30a. Thus, the pair of nip rollers 50a disposed vertically may press the lower separator 30a, the negative electrode 20, and the upper separator 30b in the stacking direction.

In addition, in the embodiment, an auxiliary nip roller 50b is further disposed, and the auxiliary nip roller 50b is also disposed vertically in a pair. The adhesive A is applied onto the upper separator 30b, and the positive electrode 10 is input. Then, the upper separator 30b and the positive electrode 10 pass through therebetween.

After passing through the auxiliary nip rollers 50b, a region between the neighboring positive electrodes 10 is cut by the cutter 60c, whereby an individual unit cell 40 may be manufactured.

Here, the manufacturing apparatus provided in the embodiment may be further provided with a first vision 90a, a second vision 90b, and a third vision 90c.

The first vision 90a is disposed above the negative electrode 20 and captures an image of a position, in which the negative electrode 20 is mounted by the first gripper 100a, before the negative electrode 20 reaches the lower separator 30a, and the second vision 90b is disposed above the positive electrode 10 and captures an image of a position, in which the positive electrode 10 is mounted by the second gripper 100b, before the positive electrode 10 reaches the upper separator 30b. Also, the third vision 90c is further disposed at a selected position on a path through which the separators 30a and 30b are conveyed, and captures images of the stack states and conveyance states of the negative electrode 20, the positive electrode 10, and the separators 30a and 30b.

The first vision 90a, the second vision 90b, and the third vision 90c capture images of the conveyance states of the grippers 100a and 100b and the electrodes 10 and 20, and are configured to transmit the captured image signals to computing device (not shown) that controls operation of each device. On the basis of the received image signals, the computing device controls the operation of the grippers 100a and 100b, the nozzles 70a, 70b, and 70c, and the upper reel and the lower reel. The first vision 90a, the second vision 90b, and the third vision 90c may comprise image capturing elements such as a charge coupled device (CCD) or a complementary metal-oxide semiconductor (CMOS), and may capture in real-time images of states before and after the negative electrode 20 and the positive electrode 10 are mounted to the lower separator 30a and the upper separator 30b and a moving state thereof while stacked. Also, the computing device compares the acquired images with images stored in advance for good products of the negative electrode 20 and the positive electrode 10, and thus, the size and shape of each of the negative electrode 20 and the positive electrode 10, whether there is a position failure, whether there is damage, or the like may be identified.

Also, the first vision 90a, the second vision 90b, and the third vision 90c are not fixed but coupled to a sliding device (not shown), and/or are configured such that camera angle and zoom may be adjusted. Thus, the negative electrode 20 and the positive electrode 10 may be monitored in real time while moving.

In addition, a separate light source 91 may be added in the vicinity of the lower separator 30a and the upper separator 30b so that the image quality is further improved while the images are captured by the first vision 90a, the second vision 90b, and the third vision 90c.

Also, in the embodiment, each of the first nozzle 70a, the second nozzle 70b, and the third nozzle 70c is provided with a plurality of nipples α, β, and γ having ends through which adhesives A are applied.

The nipples α, β, and γ of each of the first nozzle 70a, the second nozzle 70b, and the third nozzle 70c are spaced apart from each other so that nipples α and γ disposed outside apply the adhesives in the vicinity of an edge of the electrode (the positive electrode and the negative electrode), and a nipple β disposed between the nipples α and γ applies the adhesives to the vicinity of the center of the electrode.

The spray speeds, spray amounts, spray areas, and the like of the adhesives A, which are sprayed from the nipples α, β, and γ of each of the first nozzle 70a, the second nozzle 70b, and the third nozzle 70c, may be individually controlled.

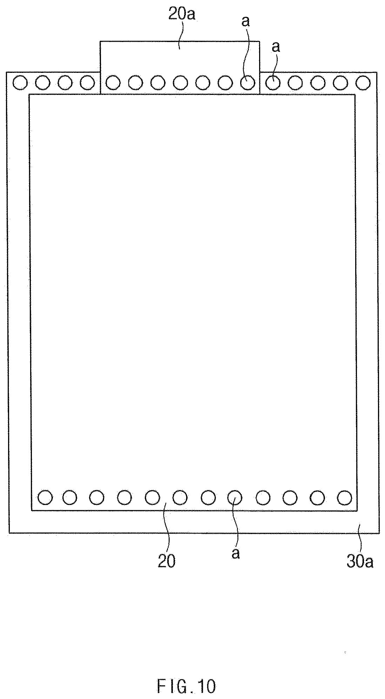

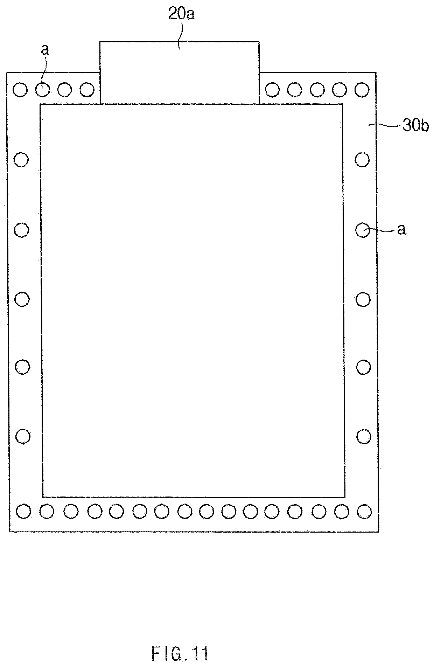

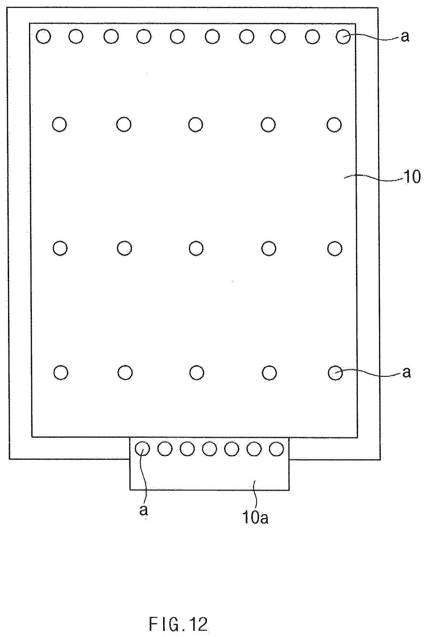

FIG. 10 is a view showing points a to which the adhesive is applied by the first nozzle 70a before the negative electrode 20 is stacked on the lower separator 30a, FIG. 11 is a view (in a state in which the upper separator 30b is stacked on the negative electrode) showing points a to which the adhesive is applied by the first nozzle 70a and the second nozzle 70b after the upper separator 30b is stacked on the negative electrode 20, and FIG. 12 is a view showing points a to which the adhesive is applied by the third nozzle 70c before the positive electrode 10 is stacked on the top surface of the upper separator 30b stacked on the negative electrode 20.

Referring to FIGS. 10 to 12, the adhesive may be sprayed onto the lower separator 30a through the first nozzle 70a in a predetermined size. Here, regions a on which the adhesive is sprayed may be dense in a region in which an negative electrode tab 20a protrudes, with respect to the short sides (an upper end side and a lower end side in FIG. 10) on both sides of the negative electrode 20. That is, the nipple β on the center among the nipples α, β, and γ of the first nozzle 70a does not apply the adhesive, but only the nipples α and γ on both sides apply the adhesive. The spray speed of the nipple α positioned on the negative electrode tab 20a is made greater than that of the nipple γ on the opposite side, and thus, adhesive-applied regions a may be made relatively more dense.

Also, adhesive-applied regions a formed on both the long sides (both sides in FIG. 11) of the negative electrode 20 in FIG. 11 are regions on which the adhesive is sprayed onto the upper separator 30b by the second nozzle 70b, and adhesive-applied regions a, in which the adhesive is sprayed inside the positive electrode 10 in FIG. 12, are regions on which the adhesive is sprayed onto the top surface of the upper separator 30b before the positive electrode 10 is stacked on the upper separator 30b. Here, adhesive-applied regions a may also be made more dense in an area in which a positive electrode tab 10a is positioned.

Those with ordinary skill in the technical field to which the present invention pertains will understand that the present invention may be implemented in other specific forms without changing the technical idea or essential features. Thus, the above-described embodiments are to be considered illustrative and not restrictive to all aspects. The scope of the present invention is defined by the appended claims rather than the detailed description.

### [Description of the Symbols]

10: Positive electrode
20: Negative electrode
30: Separator (30a: Lower separator, 30b: Upper separator)
40: Unit cell
50a: Nip roller 50b: Auxiliary nip roller
51: Guide roller
60a, 60b, 60c: Cutter
70, 80: nozzle, 70a: First nozzle, 70b: Second nozzle, 70c: Third nozzle
90a: First vision, 90b: Second vision, 90c: Third vision
100a: First gripper, 100b: Second gripper
110a, 110b: Table

## Claims

1. A method for manufacturing a unit cell (40), the method comprising: a step of continuously conveying and supplying, in a longitudinal direction, a lower separator (30a) which is located at a relatively lower position;
a step of applying an adhesive (A) to a portion of a top surface of the lower separator (30a);
a step of mounting, on the lower separator (30a), one electrode of a negative electrode (20) or a positive electrode (10) which is cut into a predetermined size and located on one side of the lower separator (30a);
a step of continuously conveying and supplying an upper separator (30b) which is located at a relatively upper position; and
a step of applying an adhesive (A) to a portion of one surface of the upper separator (30b),
wherein the upper separator (30b) is supplied from the upper side in a direction perpendicular to a traveling direction of the lower separator (30a), and is horizontally conveyed while the adhesive (A) is applied so that the adhesive (A) is applied vertically from the upper side, and wherein the upper separator (30b) is stacked on the electrode (20) such that one surface of the upper separator (30b) on which the adhesive (A) has been applied is placed on a top surface of the electrode (20).

2. The method of claim 1, wherein the upper separator (30b) is conveyed along a nip roller (50a) pressing the lower separator (30a) and the electrode (20) and a guide roller (51) disposed above the nip roller (50a), and both surfaces of the upper separator (30b) are reversed, and
wherein, when the one surface of the upper separator (30b) is laid horizontally while conveyed along the guide roller (51), the adhesive (A) is applied onto the one surface, and the upper separator (30b) is input between the nip roller (50a) and the electrode (20) such that the one surface on which the adhesive (A) has been applied covers the top surface of the electrode (20).

3. The method of claim 2, further comprising a step of further applying an adhesive (A) to a portion of the top surface of the upper separator (30b) after the upper separator (30b) is stacked on the electrode (20).

4. The method of claim 3, comprising, after the step of further applying the adhesive (A) to the portion of the top surface of the upper separator (30b), a step of further mounting an electrode (10) onto the top surface of the upper separator (30b) on which the adhesive (A) has been applied,
wherein the electrode (10) mounted on the top surface of the upper separator (30b) has a different polarity from the electrode (20) stacked between the upper separator (30b) and the lower separator (30a).

5. The method of claim 4, comprising a step of allowing the lower separator (30a), the electrode (20), the upper separator (30b), and the electrode (10), which are stacked in this order from the lower side to the upper side, to pass through between a pair of auxiliary nip rollers (50b), thereby pressing the lower separator (30a), the electrode (20), the upper separator (30b), and the electrode (10).

6. An apparatus for manufacturing a unit cell (40), the apparatus comprising:
a lower reel from which a lower separator (30a) located at a relatively lower position is unwound;
a first nozzle (70a) configured to apply an adhesive (A) to a top surface of the unwound lower separator (30a);
an upper reel from which an upper separator (30b) located at a relatively upper position is unwound;
a second nozzle (70b) configured to apply an adhesive (A) to one surface of the unwound upper separator (30b);
a guide roller (51) configured to change a conveyance direction of the upper separator (30b) so that the upper separator (30b) unwound from the upper reel passes horizontally under the second nozzle (70b);
a nip roller (50a) configured to input the upper separator (30b) onto an electrode (20) such that, after passing through the guide roller (51), the one surface of the upper separator (30b) on which the adhesive (A) has been applied faces downward and is bonded to a top surface of the electrode (20) mounted on the top surface of the lower separator (30a); and
a first gripper (100a) configured to mount the electrode (20), which is cut into a predetermined size and located on one side of the lower separator (30a), on the top surface of the lower separator (30a) on which the adhesive (A) has been applied,
wherein the upper separator (30b) is stacked such that the surface of the upper separator (30b), on which the adhesive (A) has been applied, is placed as a bottom surface by the nip roller (50a) so as to come into contact with the electrode (20), and
wherein the apparatus further comprises:
a third nozzle (70c) configured to apply an adhesive (A) to a top surface of the upper separator (30b) after the upper separator (30b) is stacked on the electrode (20), and
a second gripper (100b) configured to mount an electrode (10), which is cut into a predetermined size and located on one side of the upper separator (30b) and which has a different polarity from the electrode (20) stacked below the upper separator (30b), on the top surface of the upper separator (30b) on which the adhesive (A) has been applied.

7. The apparatus of claim 6, comprising a first vision (90a) which is disposed above the electrode (20) and captures an image of a position, in which the electrode (20) is mounted by the first gripper (100a), prior to bonding the electrode (20) to the lower separator (30a).

8. The apparatus of claim 6, wherein the nip roller (50a) is disposed on each of both sides of a first stack, which is formed by stacking the lower separator (30a), the electrode (20), the upper separator (30b) in this order, and presses the first stack while rotating.

9. The apparatus of claim 8, wherein the nip roller (50a) and the guide roller (51) are spaced a certain distance from each other, and the upper separator (30b) remains horizontal while the upper separator (30b) is conveyed between the nip roller (50a) and the guide roller (51).

10. The apparatus of claim 6, comprising an auxiliary nip roller (50b) which is disposed on each of both sides of a second stack, which is formed by mounting the lower separator (30a), the electrode (20), the upper separator (30b), and the electrode (10) in this order from the lower side below, and presses the second stack while rotating.

11. The apparatus of claim 6, comprising a second vision (90b) configured to capture an image of a position, in which the electrode (10) is mounted by the second gripper (100b), prior to mounting the electrode (10) onto the upper separator (30b).

12. The apparatus of any one of claims 6 to 11, wherein each of the first nozzle (70a), the second nozzle (70b), and the third nozzle (70c) comprises a plurality of nipples (α, β, γ) having ends through which the adhesives (A) are applied, and
the nipples (α, β, γ) of each of the first nozzle (70a), the second nozzle (70b), and the third nozzle (70c) are spaced apart from each other so that nipples (α, γ) disposed outside apply the adhesives (A) in the vicinity of an edge of the electrode (10, 20), and a nipple (β) disposed between the nipples (α, γ) applies the adhesives (A) to the vicinity of the center of the electrode (10, 20),
wherein spray speeds and spray amounts of the adhesives (A), which are sprayed from the nipples (α, β, γ) of each of the first nozzle (70a), the second nozzle (70b), and the third nozzle (70c), are individually controlled.

## Patentansprüche

1. Verfahren zur Herstellung einer Einheitszelle (40), wobei das Verfahren umfasst: einen Schritt eines kontinuierlichen Beförderns und Zuführens, in einer longitudinalen Richtung, eines unteren Separators (30a), welcher an einer unteren Relativposition angeordnet ist;
einen Schritt eines Aufbringens eines Haftmittels (A) auf einen Abschnitt einer oberen Fläche des unteren Separators (30a);
einen Schritt eines Befestigens, an dem unteren Separator (30a), einer Elektrode einer negativen Elektrode (20) oder einer positiven Elektrode (10), welche auf eine vorbestimmte Größe geschnitten ist und an einer Seite des unteren Separators (30a) angeordnet ist;
einen Schritt eines kontinuierlichen Beförderns und Zuführens eines oberen Separators (30b), welcher an einer oberen Relativposition angeordnet ist; und
einen Schritt eines Aufbringens eines Haftmittels (A) auf einen Abschnitt einer Fläche des oberen Separators (30b),
wobei der obere Separator (30b) von der oberen Seite in einer Richtung zugeführt wird, welche senkrecht zu einer Fahrtrichtung des unteren Separators (30a) ist, und horizontal befördert wird, während das Haftmittel (A) aufgebracht wird, sodass das Haftmittel (A) vertikal von der oberen Seite aufgebracht wird, und wobei der obere Separator (30b) derart an der Elektrode (20) gestapelt ist, dass eine Fläche des oberen Separators (30b), auf welche das Haftmittel (A) aufgebracht worden ist, auf eine obere Fläche der Elektrode (20) platziert wird.

2. Verfahren nach Anspruch 1, wobei der obere Separator (30b) entlang einer Andruckwalze (50a), welche den unteren Separator (30a) und die Elektrode (20) presst, und einer Führungswalze (51) befördert wird, welche über der Andruckwalze (50a) angeordnet ist, und wobei beide Flächen des oberen Separators (30b) umgedreht sind, und
wobei, wenn die eine Fläche des oberen Separators (30b) während eines Beförderns entlang der Führungswalze (51) horizontal ausgelegt ist, das Haftmittel (A) auf die eine Fläche aufgebracht wird, und wobei der obere Separator (30b) derart zwischen die Andruckwalze (50a) und die Elektrode (20) eingesetzt wird, dass die eine Fläche, auf welche das Haftmittel (A) aufgebracht worden ist, die obere Fläche der Elektrode (20) bedeckt.

3. Verfahren nach Anspruch 2, ferner umfassend einen Schritt eines weiteren Aufbringens eines Haftmittels (A) auf einen Abschnitt der oberen Fläche des oberen Separators (30b) nachdem der obere Separator (30b) an der Elektrode (20) gestapelt ist.

4. Verfahren nach Anspruch 3, umfassend, nach dem Schritt eines weiteren Aufbringens des Haftmittels (A) auf den Abschnitt der oberen Fläche des oberen Separators (30b), einen Schritt eines weiteren Befestigens einer Elektrode (10) auf die obere Fläche des oberen Separators (30b), auf welche das Haftmittel (A) aufgebracht worden ist,
wobei die Elektrode (10), welche an der oberen Fläche des oberen Separators (30b) befestigt ist, zu der Elektrode (20), welche zwischen dem oberen Separator (30b) und dem unteren Separator (30a) gestapelt ist, eine unterschiedliche Polarität aufweist.

5. Verfahren nach Anspruch 4, umfassend einen Schritt eines Zulassens eines Passierens des unteren Separators (30a), der Elektrode (20), des oberen Separators (30b) und der Elektrode (10), welche in dieser Reihenfolge von der unteren Seite zu der oberen Seite gestapelt sind, durch ein Paar von Hilfsandruckwalzen (50b), wodurch der untere Separator (30a), die Elektrode (20), der obere Separator (30b) und die Elektrode (10) gepresst werden.

6. Vorrichtung zur Herstellung einer Einheitszelle (40), wobei die Vorrichtung umfasst:
eine untere Spule, von welcher ein unterer Separator (30a) abgewickelt wird, welcher an einer unteren Relativposition angeordnet ist,
eine erste Düse (70a), welche dazu eingerichtet ist, ein Haftmittel (A) auf eine obere Fläche des abgewickelten unteren Separators (30a) aufzubringen;
eine obere Spule, von welcher ein oberer Separator (30b) abgewickelt wird, welcher an einer oberen Relativposition angeordnet ist;
eine zweite Düse (70b), welche dazu eingerichtet ist, ein Haftmittel (A) auf eine Fläche des abgewickelten oberen Separators (30b) aufzubringen;
eine Führungswalze (51), welche dazu eingerichtet ist, eine Beförderungsrichtung des oberen Separators (30b) zu ändern, sodass der obere Separator (30b), welcher von der oberen Spule abgewickelt worden ist, horizontal unter der zweiten Düse (70b) passiert;
eine Andruckwalze (50a), welche dazu eingerichtet ist, den oberen Separator (30b) auf eine Elektrode (20) zu geben, sodass, nach einem Passieren durch die Führungswalze (51), die eine Fläche des oberen Separators (30b), auf welche das Haftmittel (A) aufgebracht worden ist, nach unten zeigt und an eine obere Fläche der Elektrode (20) geklebt ist, welche an der oberen Fläche des unteren Separators (30a) befestigt ist; und
eine erste Greifeinheit (100a), welche dazu eingerichtet ist, die Elektrode (20), welche auf eine vorbestimmte Größe geschnitten ist und an einer Seite des unteren Separators (30a) angeordnet ist, an der oberen Fläche des unteren Separators (30a) zu befestigen, auf welche das Haftmittel (A) aufgebracht worden ist,
wobei der obere Separator (30b) derart gestapelt ist, dass die Fläche des oberen Separators (30b), auf welche das Haftmittel (A) aufgebracht worden ist, durch die Andruckwalze (50a) als eine untere Fläche platziert ist, um mit der Elektrode (20) in Kontakt zu treten, und
wobei die Vorrichtung ferner umfasst:
eine dritte Düse (70c), welche dazu eingerichtet ist, ein Haftmittel (A) auf eine obere Fläche des oberen Separators (30b) aufzubringen, nachdem der obere Separator (30b) an der Elektrode (20) gestapelt ist, und
eine zweite Greifeinheit (100b), welche dazu eingerichtet ist, eine Elektrode (10), welche auf eine vorbestimmte Größe geschnitten ist und an einer Seite des oberen Separators (30b) angeordnet ist und welche zu der Elektrode (20), welche unter dem oberen Separator (30b) gestapelt ist, eine unterschiedliche Polarität aufweist, an der oberen Fläche des oberen Separators (30b) zu befestigen, auf welche das Haftmittel (A) aufgebracht worden ist.

7. Vorrichtung nach Anspruch 6, umfassend eine erste Bildverarbeitung (90a), welche über der Elektrode (20) angeordnet ist und ein Bild einer Position aufnimmt, in welcher die Elektrode (20) durch die erste Greifeinheit (100a) befestigt ist, vor einem Verkleben der Elektrode (20) an dem unteren Separator (30a).

8. Vorrichtung nach Anspruch 6, wobei die Andruckwalze (50a) an jeder der beiden Seiten eines ersten Stapels angeordnet ist, welcher durch Stapeln des unteren Separators (30a), der Elektrode (20), des oberen Separators (30b) in dieser Reihenfolge gebildet ist, und den ersten Stapeln während eines Rotierens presst.

9. Vorrichtung nach Anspruch 8, wobei die Andruckwalze (50a) und die Führungswalze (51) um einen bestimmten Abstand voneinander beabstandet sind, und wobei der obere Separator (30b) horizontal verbleibt, während der obere Separator (30b) zwischen der Andruckwalze (50a) und der Führungswalze (51) befördert wird.

10. Vorrichtung nach Anspruch 6, umfassend eine Hilfsandruckwalze (50b), welche an jeder der beiden Seiten eines zweiten Stapels angeordnet ist, welcher durch Befestigen des unteren Separators (30a), der Elektrode (20), des oberen Separators (30b) und der Elektrode (10) in dieser Reihenfolge von unter der unteren Seite gebildet ist, und den zweiten Stapeln während eines Rotierens presst.

11. Vorrichtung nach Anspruch 6, umfassend eine zweite Bildverarbeitung (90b), welche dazu eingerichtet ist, ein Bild einer Position aufzunehmen, in welcher die Elektrode (10) durch die zweite Greifeinheit (100b) befestigt ist, vor einem Befestigen der Elektrode (10) auf den oberen Separator (30b).

12. Vorrichtung nach einem der Ansprüche 6 bis 11, wobei jede aus der ersten Düse (70a), der zweiten Düse (70b) und der dritten Düse (70c) eine Mehrzahl von Stutzen (α, β, γ) umfasst, welche Enden aufweisen, durch welche die Haftmittel (A) aufgebracht werden, und
wobei die Stutzen (α, β, γ) von jeder aus der ersten Düse (70a), der zweiten Düse (70b) und der dritten Düse (70c) voneinander beabstandet sind, sodass Stutzen (α, γ), welche außerhalb angeordnet sind, die Haftmittel (A) in der Umgebung eines Rands der Elektrode (10, 20) aufbringen und ein Stutzen (β), welcher zwischen den Stutzen (α, γ) angeordnet ist, die Haftmittel (A) auf die Umgebung des Zentrums der Elektrode (10, 20) aufbringt,
wobei Sprühgeschwindigkeiten und Sprühmengen der Haftmittel (A), welche von den Stutzen (α, β, γ) von jeder aus der ersten Düse (70a), der zweiten Düse (70b) und der dritten Düse (70c) gesprüht werden, individuell gesteuert sind.

## Revendications

1. Procédé de fabrication d'une cellule unitaire (40), le procédé comprenant : une étape consistant à transporter et à fournir en continu, dans une direction longitudinale, un séparateur inférieur (30a) qui est situé à une position relativement inférieure ;
une étape consistant à appliquer un adhésif (A) sur une partie d'une surface supérieure du séparateur inférieur (30a) ;
une étape consistant à monter, sur le séparateur inférieur (30a), une électrode parmi une électrode négative (20) ou une électrode positive (10) qui est découpée en une taille prédéterminée et située d'un côté du séparateur inférieur (30a) ;
une étape consistant à transporter et à fournir en continu un séparateur supérieur (30b) qui est situé à une position relativement supérieure ; et
une étape consistant à appliquer un adhésif (A) sur une partie d'une surface du séparateur supérieur (30b),
dans lequel le séparateur supérieur (30b) est fourni à partir du côté supérieur dans une direction perpendiculaire à une direction de déplacement du séparateur inférieur (30a), et est transporté horizontalement pendant que l'adhésif (A) est appliqué de sorte que l'adhésif (A) soit appliqué verticalement à partir du côté supérieur, et dans lequel le séparateur supérieur (30b) est empilé sur l'électrode (20) de sorte qu'une surface du séparateur supérieur (30b) sur laquelle l'adhésif (A) a été appliqué soit placée sur une surface supérieure de l'électrode (20).

2. Procédé selon la revendication 1, dans lequel le séparateur supérieur (30b) est transporté le long d'un rouleau de laminage (50a) pressant le séparateur inférieur (30a) et l'électrode (20) et un rouleau de guidage (51) disposé au-dessus du rouleau de laminage (50a), et les deux surfaces du séparateur supérieur (30b) sont inversées, et dans lequel, lorsque l'une des surfaces du séparateur supérieur (30b) est posée horizontalement tout en étant transportée le long du rouleau de guidage (51), l'adhésif (A) est appliqué sur l'une des surfaces, et le séparateur supérieur (30b) est introduit entre le rouleau de laminage (50a) et l'électrode (20) de sorte que l'une des surfaces sur laquelle l'adhésif (A) a été appliqué recouvre la surface supérieure de l'électrode (20).

3. Procédé selon la revendication 2, comprenant en outre une étape consistant à appliquer en outre un adhésif (A) sur une partie de la surface supérieure du séparateur supérieur (30b) après que le séparateur supérieur (30b) est empilé sur l'électrode (20).

4. Procédé selon la revendication 3, comprenant, après l'étape consistant à appliquer en outre l'adhésif (A) sur la partie de la surface supérieure du séparateur supérieur (30b), une étape consistant à monter en outre une électrode (10) sur la surface supérieure du séparateur supérieur (30b) sur laquelle l'adhésif (A) a été appliqué,
dans lequel l'électrode (10) montée sur la surface supérieure du séparateur supérieur (30b) a une polarité différente de l'électrode (20) empilée entre le séparateur supérieur (30b) et le séparateur inférieur (30a).

5. Procédé selon la revendication 4, comprenant une étape consistant à permettre au séparateur inférieur (30a), à l'électrode (20), au séparateur supérieur (30b) et à l'électrode (10), qui sont empilés dans cet ordre du côté inférieur au côté supérieur, de passer entre une paire de rouleaux de laminage auxiliaires (50b), pour ainsi presser le séparateur inférieur (30a), l'électrode (20), le séparateur supérieur (30b) et l'électrode (10).

6. Appareil de fabrication d'une cellule unitaire (40), l'appareil comprenant :
une bobine inférieure depuis laquelle un séparateur inférieur (30a) situé à une position relativement inférieure est déroulé ;
une première buse (70a) configurée pour appliquer un adhésif (A) sur une surface supérieure du séparateur inférieur (30a) déroulé ;
une bobine supérieure depuis laquelle un séparateur supérieur (30b) situé à une position relativement supérieure est déroulé ;
une deuxième buse (70b) configurée pour appliquer un adhésif (A) sur une surface du séparateur supérieur (30b) déroulé ;
un rouleau de guidage (51) configuré pour changer une direction de transport du séparateur supérieur (30b) de sorte que le séparateur supérieur (30b) déroulé depuis la bobine supérieure passe horizontalement sous la deuxième buse (70b) ;
un rouleau de laminage (50a) configuré pour introduire le séparateur supérieur (30b) dans une électrode (20) de sorte qu'après avoir traversé le rouleau de guidage (51), l'une des surfaces du séparateur supérieur (30b) sur laquelle l'adhésif (A) a été appliqué soit orientée vers le bas et soit collée à une surface supérieure de l'électrode (20) montée sur la surface supérieure du séparateur inférieur (30a) ; et
un premier dispositif de préhension (100a) configuré pour monter l'électrode (20), qui est découpée en une taille prédéterminée et située sur un côté du séparateur inférieur (30a), sur la surface supérieure du séparateur inférieur (30a) sur laquelle l'adhésif (A) a été appliqué,
dans lequel le séparateur supérieur (30b) est empilé de sorte que la surface du séparateur supérieur (30b), sur laquelle l'adhésif (A) a été appliqué, soit placée en tant que surface inférieure par le rouleau de laminage (50a) de façon à entrer en contact avec l'électrode (20), et
dans lequel l'appareil comprend en outre :
une troisième buse (70c) configurée pour appliquer un adhésif (A) sur une surface supérieure du séparateur supérieur (30b) après que le séparateur supérieur (30b) est empilé sur l'électrode (20), et
un deuxième dispositif de préhension (100b) configuré pour monter une électrode (10), qui est découpée en une taille prédéterminée et située sur un côté du séparateur supérieur (30b) et qui a une polarité différente de l'électrode (20) empilée en dessous du séparateur supérieur (30b), sur la surface supérieure du séparateur supérieur (30b) sur laquelle l'adhésif (A) a été appliqué.

7. Appareil selon la revendication 6, comprenant une première vision (90a) qui est disposée au-dessus de l'électrode (20) et capture une image d'une position, dans laquelle l'électrode (20) est montée au moyen du premier dispositif de préhension (100a), avant de coller l'électrode (20) au séparateur inférieur (30a).

8. Appareil selon la revendication 6, dans lequel le rouleau de laminage (50a) est disposé sur chacun des deux côtés d'une première pile, qui est formée par empilement du séparateur inférieur (30a), de l'électrode (20), du séparateur supérieur (30b) dans cet ordre, et presse la première pile en tournant.

9. Appareil selon la revendication 8, dans lequel le rouleau de laminage (50a) et le rouleau de guidage (51) sont espacés l'un de l'autre d'une certaine distance, et le séparateur supérieur (30b) reste horizontal tandis que le séparateur supérieur (30b) est transporté entre le rouleau de laminage (50a) et le rouleau de guidage (51).

10. Appareil selon la revendication 6, comprenant un rouleau de laminage auxiliaire (50b) qui est disposé sur chacun des deux côtés d'une deuxième pile, qui est formée par montage du séparateur inférieur (30a), de l'électrode (20), du séparateur supérieur (30b) et de l'électrode (10) dans cet ordre à partir du côté inférieur en dessous, et presse la deuxième pile en tournant.

11. Appareil selon la revendication 6, comprenant une deuxième vision (90b) configurée pour capturer une image d'une position, dans laquelle l'électrode (10) est montée au moyen du deuxième dispositif de préhension (100b), avant de monter l'électrode (10) sur le séparateur supérieur (30b).

12. Appareil selon l'une quelconque des revendications 6 à 11, dans lequel chacune de la première buse (70a), de la deuxième buse (70b) et de la troisième buse (70c) comprend une pluralité de mamelons (α, β, γ) ayant des extrémités à travers lesquelles les adhésifs (A) sont appliqués, et
les mamelons (α, β, γ) de chacune de la première buse (70a), de la deuxième buse (70b) et de la troisième buse (70c) sont espacés les uns des autres de sorte que des mamelons (α, γ) disposés à l'extérieur appliquent les adhésifs (A) à proximité d'un bord de l'électrode (10, 20), et un mamelon (β) disposé entre les mamelons (α, γ) applique les adhésifs (A) à proximité du centre de l'électrode (10, 20),
dans lequel des vitesses de pulvérisation et des quantités pulvérisées des adhésifs (A), qui sont pulvérisés à partir des mamelons (α, β, γ) de chacune de la première buse (70a), de la deuxième buse (70b) et de la troisième buse (70c), sont commandées individuellement.
